# EUROPÄISCHE PATENTSCHRIFT

(11) **EP 0 815 912 B1**
(45) Veröffentlichungstag und Bekanntmachung des Hinweises auf die Patenterteilung: **27.11.2002**
(21) Anmeldenummer: 97107689.8
(22) Anmeldetag: 10.05.1997
(51) Int. Cl.: B01D 21/24, B01D 17/025, E03F 5/14

(54) **Verfahren zum Abräumen von Schwimmstoffen und Räumvorrichtung**
Method for a clearing of floating matters, and removal device
Procédé pour se débarrasser de matières flottantes, et dispositif d'enlèvement

(30) Priorität: 05.07.1996 DE 19627161
(43) Veröffentlichungstag der Anmeldung: 07.01.1998
(73) Patentinhaber: Frankenberger, Dieter, D-35415 Pohlheim (DE)
(72) Erfinder: Frankenberger, Dieter, D-35415 Pohlheim (DE)
(74) Vertreter: Missling, Arne, Dipl.-Ing.

(56) Entgegenhaltungen:
- WO-A-92/01516
- DE-A- 3 934 874
- US-A- 3 307 701
- US-A- 4 022 696
- US-A- 4 377 485
- US-A- 4 626 345
- US-A- 5 047 151
- US-A- 5 188 729

## Beschreibung

Die Erfindung betrifft ein Verfahren und eine Vorrichtung zum Abräumen von Schwimmstoffen von der Oberfläche eines Abwassers in einem Absetzbecken einer Kläranlage oder dergleichen.

Bei der mechanischen Reinigung von Abwässern in Absetzbecken oder ähnlichen Einrichtungen müssen außer den als Sedimente abgelagerten Verunreinigungen auch noch auf der Oberfläche angesammelte Schwimmstoffe entfernt werden. Es ist üblich, durch kontinuierliches Abpumpen oder durch mechanische Abnahme der Schwimmstoffe, diese von der Oberfläche des Abwassers zu trennen. Ein derartiges Verfahren für die Entnahme und die Entsorgung solcher Schwimmstoffe erfordert erhebliche Kosten. Die Schwimmstoffe müssen in den Absetzbecken unabhängig von deren baulicher Ausbildung von der gesamten Oberfläche des Abwassers abgepumpt oder anderweitig beseitigt werden, so daß die zugehörigen Saug- oder Fördereinrichtungen entsprechend geführt werden müssen, wobei zumeist noch die bei diesen Absetzbecken erforderlichen Räumer und deren Bewegung zu beachten sind, die ebenfalls, genauso wie die Saug- oder Fördereinrichtungen, ständig bewegt werden. Bei diesen Verfahren werden große Wassermengen mit angepumpt.

Die Erfindung hat sich deshalb die Aufgabe gestellt, ein derartiges, eingangs näher bezeichnetes Verfahren so ausführen, daß der bauliche Aufwand gering bleibt und insbesondere eine Überführung der Schwimmstoffe in einfacher Weise und mit sehr wenig Wasser auch in Entwässerungsbehälter möglich wird.

Erfindungsgemäß wird die Aufgabe dadurch gelöst, daß die Schwimmstoffe mittels einer Förderschnecke in einen in dem Absetzbecken eintauchenden Zwischenbehälter gefördert werden und dabei das darin befindliche Abwasser durch eine im Bodenbereich angeordnete Öffnung verdrängen und das in dem Zwischenbehälter angesammelte Fördergut (FG) nach Bedarf zeit- und/oder füllungsabhängig abgepumpt wird.

Der Zwischenbehälter ist demnach als Puffer zwischen einen kontinuierlich betriebenen Abbau der Schwimmstoffe von der Oberfläche des Abwassers und einen diskontinuierlichen, von der Menge der gesammelten Schwimmstoffe bestimmten Abtransport geschaltet.

Die Schwimmstoffe werden von der Oberfläche in breiter Front von der Förderschnecke abgebaut, wenn diese während der Förderung der Schwimmstoffe quer zu ihrer durch die Förderrichtung bestimmten Längsachse entlang der Oberfläche des Abwassers bewegt wird. Vorteilhaft wird die Förderschnecke dabei so gedreht, daß diese sich an der Seite aus dem Wasser herausbewegt, an der die Schwimmstoffe zugeführt werden. Hierdurch ist ein äußerst wirksames Abschöpfen der Schwimmstoffe gegeben. Es ist auch denkbar, die Föderschnecke ortsfest anzuordnen und dieser mittels einer geeigneten Räumeinrichtung die Schwimmstoffe zuzuführen. Ortsfeste Förderschnecken bieten sich bei nicht runden Becken an.

Die Förderschnecke wird demnach in ihrer wirksamen Länge von Schwimmstoffen angeströmt, und durch den um ihre Längsachse rotierenden Schneckengang werden die Schwimmstoffe in Richtung der Längsachse (Förderrichtung) zu dem Ende der Förderschnecke transportiert, entsprechende bauliche Gestaltung vorausgesetzt, wie untenstehend erläutert wird.

Vorteilhaft ist im Zwischenbehälter dicht unterhalb der Abwasseroberfläche ein Trichter angeordnet, der vorteilhaft in etwa den gesamten Querschnitt des Zwischenbehälters ausfüllt. Dieser Trichter ist mit der Ansaugöffnung einer Pumpe verbunden.

Um ein Abpumpen über den Trichter zu unterstützen ist es vorteilhaft, wenn geringfügig Wasser aus dem Absetzbecken über die Bodenöffnung in den Zwischenbehälter fließt. Die Menge des Wassers kann dabei durch das Bodenventil reguliert werden.

Die auf dem Abwasser aufliegenden Schwimmstoffe werden von der Förderschnecke optimal erfaßt und in den Zwischenbehälter gefördert, wenn die aus einer in dem Zwischenbehälter gelagerten Schneckenwelle und einem Schneckengang bestehende Förderschnecke an der Oberfläche des Abwassers und zu dieser parallel angeordnet ist, besonders wirksam dadurch, daß die Förderschnecke so über dem Abwasser höhengeführt ist, daß die Schneckenwelle, die Oberfläche des Abwassers dabei etwa tangierend, eine Barriere für die schwimmstoffe bildet. Die Höhenführung kann dabei von Hand oder durch eine Niveauregelung erfolgen; sie kann aber auch auf einen festen Wert eingestellt sein, wenn die Oberfläche des Abwassers selbst höhengeregelt ist. Die erfindungsgemäße Führung der Förderschnecke stellt sicher, daß alle Schwimmstoffe in den Bereich des Schneckenganges gelangen und nicht auf die Abströmseite der Förderschnecke, wenn sie bei der Förderung durch den Schneckengang am Verlassen der Förderschnecke gehindert werden, wie unten noch zu erläutern ist.

Das jeweilige Abpumpen der Schwimmstoffe aus dem Zwischenbehälter erfolgt entweder in Abhängigkeit von der Menge des eingespeisten Fördergutes oder zeitabhängig.

Das Verfahren wird zweckmäßig mittels einer erfindungsgemäßen Räumvorrichtung ausgeführt, bei der der Zwischenbehälter an der Förderschnecke an deren in ihrer Förderrichtung befindlichem Ende vorgesehen ist, so daß die Förderschnecke in ihrer ganzen Länge genutzt wird. Es ist dabei zweckmäßig, wenn an dem Zwischenbehälter (außerhalb des Abwassers) ein Antriebsmotor für die Förderschnecke vorgesehen ist, so daß keine beweglichen Zwischenglieder erforderlich sind, vielmehr alle drei Baugruppen des Förderschnecke, des Zwischenbehälters und des Antriebsmotores eine bauliche Einheit bilden und spätestens bei der Anbringung an dem Absetzbecken fest miteinander verbunden werden können.

Für eine solche feste Zuordnung ist es dienlich, wenn an dem Zwischenbehälter ein rohrförmig geschlossenes, kurzes Schneckengehäuse für die Förderschnecke vorgesehen ist, dessen Länge beispielsweise mindestens dem einfachen, vorteilhaft aber dem dreifachen Außen-Durchmesser der Förderschnecke entspricht. Dabei kann die Wirkung des Schneckengehäuses noch dadurch verbessert werden, daß der Innen-Durchmesser des Schneckengehäuses den Außen-Durchmesser der Förderschnecke nur soweit übertrifft, daß eine Rückförderung von Fördergut gegen die Förderrichtung im wesentlichen ausgeschlossen ist.

Auf diese Weise ist eine sichere Führung der Förderschnecke an dem Gehäuse des Zwischenbehälters gewährleistet, ohne daß die freie seitliche Zugänglichkeit der Förderschnecke für die Aufnahme der anschlagenden Schwimmstoffe ungebührlich eingeschränkt wäre, und andererseits kann mit einfachen konstruktiven Maßnahmen sichergestellt werden, daß das Fördergut auch in unmittelbarer Nachbarschaft des Zwischenbehälters nur in Förderrichtung bewegbar ist.

Im einzelnen ist es besonders platzsparend, wenn der Antriebsmotor an dem aus dem Abwasser ragenden Teil des Zwischenbehälters vorgesehen ist, insbesondere, wenn dabei die Schneckenwelle durch den Zwischenbehälter hindurchgeführt ist, der auf diese Weise zur Lagerung der Förderschnecke herangezogen wird.

Um dem Fördergut in dem Zwischenbehälter reines Abwasser zumischen und abführen zu können, kann in einfacher Weise an dem Zwischenbehälter und vorzugsweise im Bereich des Behälterbodens ein Zulaufventil vorgesehen sein, durch welches der Innenraum des Zwischenbehälters mit dem in dem Absetzbecken befindlichen Abwasser verbindbar ist. Es ist dabei vorteilhaft, wenn das Zulaufventil durch eine vorzugsweise von Hand betätigbare, aus dem Absetzbecken herausführende Stelleinrichtung bedienbar ist, so daß die Beimischung von Abwasser gesteuert werden kann. Eine mechanische Stelleinrichtung beispielsweise in Form einer Stellstange ist dabei ausreichend.

In einer besonders bevorzugten Ausführung der erfindungsgemäßen Abstreifvorrichtung ist in dem Zwischenbehälter eine Förderpumpe zur Förderung des Fördergutes durch die Förderleitung vorgesehen, so daß mit einer gekapselten, leistungsfähigen und platzsparenden Druckpumpe die Überleitung des in der Regel leicht pumpbaren Fördergutes aus dem Zwischenbehälter bewerkstelligt werden kann.

Die Wirkungsweise der erfindungsgemäßen Anordnung verlangt, daß der Schneckengang in ganzer Länge anströmseitig offen ist, so daß die Schwimmstoffe in seinen Arbeitsbereich gelangen. Eine einwandfreie Förderarbeit vermag der Schneckengang trotzdem zu leisten, wenn an der Förderschnecke auf dessen dem anströmenden Abwasser abgewandten Seite in ganzer Länge ein abströmseitiges Prallblech vorgesehen ist. Das Prallblech bildet dementsprechend ein Rudiment eines Schneckengehäuses; es ist zweckmäßig, wenn es die Förderschnecke teilweise unterfängt, vorzugsweise von dem Schneckengang gering beabstandet. Ein in dieser Form ausgebildete Förderschnecke arbeitet hocheffizient und entfernt die auf dem Abwasser liegenden Schwimmstoffe vollständig.

In einer besonders bevorzugten Ausbildung ist sie jedoch an einem an dem Absetzbecken zumeist ohnehin befindlichen, über die Oberfläche des Abwassers bewegbaren Räumer angebracht, so daß keinerlei zusätzlichen Führungs- und Antriebseinrichtungen erforderlich sind. Im einzelnen kann die Abstreifvorrichtung dadurch an dem Räumer angebracht werden, daß mehrere Halterungen für die Förderschnecke vorgesehen werden, die an dem Räumer befestigt sind. Auch das Prallblech ist dann zweckmäßig an diesen Halterungen fixiert und kann auf diese Weise paßgenau zu dem Schneckengang angebracht werden. Die gesamte Bewegung der Förderschnecke über das Absetzbecken ist damit an den Räumer gekoppelt, dessen in der Regel sehr hoher Leistungsbedarf auch noch zur Bewegung der Abstreifvorrichtung ausreicht.

Eine solche energiesparende Ausführung ist auch nicht an eine bestimmte geometrische Form des Absetzbeckens gebunden; trotzdem ist die Anordnung besonders einfach realisierbar, wenn ein kreisförmiges Absetzbecken mit einem rotierenden Räumer vorgesehen ist.

Die Oberfläche des Abwassers wird in dem Absetzbecken trotz der in diesem erforderlichen Einbauten (Auflager für den Räumer, Zwischenbehälter) restlos von Schwimmstoffen gesäubert, wenn die Förderschnecke an einem oder beiden Enden mit Leitblechen oder -schienen versehen ist, die während der Bewegung der Förderschnecke an den feststehenden Wänden des Absetzbecken so entlanggleiten, daß dabei das Abwasser im Bereich seiner Oberfläche der Förderschnecke zugeführt wird, wobei ein/e äußere/s Leitblech/Leitschiene den Zwischenbehälter in Anströmungsrichtung des Abwassers abdecken kann.

Das erfindungsgemäße Verfahren ermöglicht in Verbindung mit der zugehörigen Abstreifeinrichtung eine Reinigung des Abwassers mit ganz geringem Energie-Einsatz, der auf den Antriebsmotor für die Förderungsarbeit der Förderschnecke und die Entleerung des Zwischenbehälters beschränkt ist. Besonders bemerkenswert ist es, daß die zum Wegschaffen des Fördergutes verwendeten Transportbehälter an einer beliebigen Stelle außerhalb und in der Nähe des Absetzbeckens aufgestellt werden können und der Räumer zusammen mit der Abstreifeinrichtung stets an der gleichen Stelle angehalten werden kann, so daß auch die erforderliche Anlage zum Abpumpen und Überleiten des Fördergutes stationär ausgebildet werden kann.

Die Erfindung wird nachstehend an Hand der Zeichnung an einem Ausführungsbeispiel näher erläutert. Es zeigen
- Fig. 1: eine erf indungsgemäße Abstreifvorrichtung im Querschnitt eines Absetzbeckens in Gebrauchslage,
- Fig. 2: eine Draufsicht auf Fig. 1 und
- Fig. 3: einen vergrößerten Schnitt A - A aus Fig. 1,
sämtlich in schematischer, vereinfachter Darstellung.

In der Zeichnung ist eine erfindungsgemäße Abstreifvorrichtung V durch eine größere Strichstärke hervorgehoben; ein vorhandenes Absetzbecken A ist dagegen einschließlich eines zugehörigen Räumers R mit dünnen Linien ausgeführt.

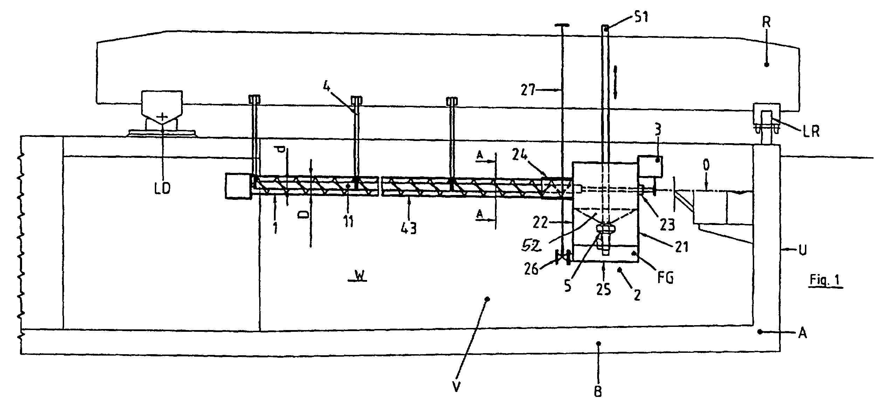

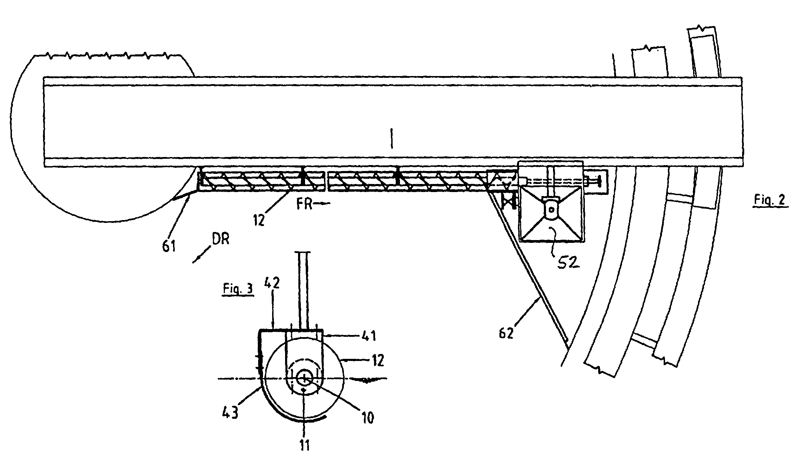

Das Absetzbecken A ist von einer Umfassungswand U berandet und weist weiterhin einen hier kreisförmigen Beckenboden B auf. Der umbaute Raum ist zum großen Teil mit dem zu reinigenden Abwasser W gefüllt, dessen Oberfläche O in den Fig. 1 und 3 angedeutet wurde. Der Räumer R ist auf einem in dem Absetzbecken A mittigen Drehauflager LD drehbar gelagert und reicht von dort her als Ausleger bis zu der Umfassungswand U, auf der der Räumer R an seinem freien Ende mit einem Rollenlager LR aufliegend bewegbar ist.

Die Abstreifvorrichtung V nach der Erfindung besteht im wesentlichen aus einer Förderschnecke 1, einem Zwischenbehälter 2 und einem Antriebsmotor 3 für die Förderschnecke 1.

Die Förderschnecke 1 ist mittels mehrerer Halterungen 4 so an dem Räumer R befestigt, daß ihre Längsachse 10 zu diesem etwa parallel verläuft und sich ungefähr entlang der Oberfläche O des Abwassers W erstreckt. Der Zwischenbehälter 2 ist ebenfalls an dem Räumer R fixiert; die Einzelheiten hierzu sind in der Zeichnung der besseren Übersichtlichkeit wegen weggelassen worden. Es ist aber zu erkennen, daß sich der Zwischenbehälter 2 am in der durch einen Richtungspfeil veranschaulichten Förderrichtung FR der Förderschnecke 1 bestimmten äußeren Ende der Förderschnecke 1 befindet, das der Umfassungswand U benachbart ist. Der Antriebsmotor 3 ist an dem Zwischenbehälter 2 auf dessen auf die Umfassungswand U hin gerichteten Seitenwand 21 angebracht.

Eine Schneckenwelle 11 der Förderschnecke 1 wird unmittelbar von dem Antriebsmotor 3 in Drehung um die Längsachse versetzt, wenn Schwimmstoffe mittels eines an der Förderschnecke 1 ausgebildeten Schneckenganges 12 von der Oberfläche O "abgebaggert" und als Fördergut FG zunächst in den Zwischenbehälter 2 gefördert werden sollen. Die Schneckenwelle 11 ist deshalb durch den Zwischenbehälter 2 hindurchgeführt und in dessen Seitenwänden 21,22 in Schneckenlagern geführt, von denen das dem Antriebsmotor 3 benachbarte, in der Seitenwand 21 vorgesehene Schneckenlager 23 in der Zeichnung angedeutet worden ist.

Auf der dem Schneckenlager 23 gegenüberliegenden Seitenwand 22 ist die Förderschnecke 1 in einem rohrförmig geschlossenen Schneckengehäuse 24 geführt, welches den Schneckengang 12 mit wenig Zwischenraum auf dessen zylindrischer Hüllfläche vom Außen-Durchmesser D vollständig umgibt und eine Länge vom zwei- bis dreifachen Außen-Durchmesser D aufweist. Die in den Bereich des rohrförmig geschlossenen Schneckengehäuses 24 geförderten Schwimmstoffe können von hier aus nur noch in den Zwischenbehälter 2 gelangen und bilden in dessen Innenraum das Fördergut FG, das noch in geeigneter Weise bis zu beweglichen Transportbehältern weiterbewegt werden muß.

Die Schneckenwelle 11 ist mit einem Durchmesser d ausgeführt und entsprechend Fig. 3 mittels Aufhängungen 41 an den Halterungen 4 leicht drehbar gelagert. An den gleichen Halterungen 4 befinden sich Holme 42, an denen ein in ganzer Länge des freien Schneckenganges 12 durchgehendes Prallblech 43 befestigt ist. Das Prallblech 43 umfängt die Förderschnecke 1 als rudimentäres Schneckengehäuse zumindest auf einem Teil der Hüllfläche mit geringer Spaltbreite.

Der Räumer R wird zusammen mit der Abstreifvorrichtung V in dem durch einen Richtungspfeil veranschaulichten Drehbewegung DR bewegt, in der Anordnung der Fig. 2 im Uhrzeigersinn. Dabei wird die Förderschnecke 1 von dem Abwasser W quer zu ihrer Längsachse 10 angeströmt, so daß das Abwasser W im Bereich seiner Oberfläche O entsprechend an der Schneckenwelle 11 gestaut wird und die darauf befindlichen Schwimmstoffe in den Arbeitsbereich des Schneckenganges 12 gelangen. Abströmseitig verhindert das Prallblech 43, daß die dabei von dem Schneckengang 12 erfaßten und abtransportierten Schwimmstoffe den Bereich der Förderschnecke 1 wieder verlassen. Das Prallblech 43 umfaßt im Ausführungsbeispiel entsprechend Fig. 3 den Schneckengang 12 im Querschnitt nur um einen reichlichen rechten Winkel, es kann jedoch auch bis zum Scheitel der Hüllfläche des Schneckenganges 12 oder sogar noch etwas weiter gezogen sein: lediglich anströmseitig muß dieser freibleiben.

Das Fördergut FG wird aus dem Zwischenbehälter 2 mittels einer Förderpumpe 5 über eine Förderleitung 51 aus dem Bereich des Absetzbeckens A abtransportiert. Die Förderpumpe 5 ist hier als gekapselte Druckpumpe und die Förderleitung 51 als Druckrohr ausgebildet; es ist aber auch möglich, die für die Förderleitung 51 ein Saugrohr oder einen Saugschlauch zu verwenden und das Fördergut FG mit einer außerhalb der Anlage installierten Saugpumpe abzuziehen. An der Ansaugseite der Förderpumpe 5 ist ein im Zwischenbehälter 2 angeordneter und diesem im Querschnitt in etwa angepaßter Trichter 52 eingesetzt, dessen Trichteröffnung etwas unterhalb des Wasserspiegels O im Absetzbecken A angeordnet ist. Die Anordnung kann mit einfachen handwerklich-regelungstechnischen Mitteln so eingerichtet werden, daß dabei eine vorgegebene Höhe des Fördergutes FG in dem Zwischenbehälter 2 nicht überschritten wird. Die Einrichtungen und die Verfahrensweise hierzu liegen im Rahmen des fachüblichen Standes der Technik und sind nicht Gegenstand der Erfindung. Es liegt aber nahe, die Förderung von Schwimmstoffen zu unterbrechen, wenn eine bestimmte Höhe des Fördergutes FG erreicht ist, und davon abhängig zunächst den Zwischenbehälter 2 zu entleeren. Der Ablauf kann auch zeitabhängig gesteuert werden, und die Ansaugöffnung für das Fördergut FG kann höhenverstellbar gehalten werden.

Um eine problemlose Abfuhr des Fördergutes FG bewerkstelligen zu können, ist die Möglichkeit vorgesehen, Abwasser W den verdichteten Schwimmstoffen zuzumischen. Zu diesem Zweck ist im Bereich des Behälterbodens 25 des Zwischenbehälters 2 ein Zulaufventil 26 vorgesehen, dessen Ventilquerschnitt mittels einer Stelleinrichtung 27 einstellbar ist. Auf diese Weise wird beim Ansaugen des Fördergutes FG eine zusätzliche Strömung erzeugt und geringfügig Abwasser W zwischen den Schwimmstoffen und den Sedimenten während des Abpumpens des Fördergutes FG mit der Förderpumpe 5 angesaugt und dabei die dem Fördergut FG zugemischte Menge mittels der Stelleinrichtung 27 bemessen. Das Zulaufventil 26 dient auch zur Abführung des Wassers im Zwischenbehälter, das durch die zugeförderten Schwimmstoffmenge verdrängt wird.

Damit bei der Drehbewegung DR die auf der Oberfläche O verteilten Schwimmstoffe vollständig geräumt werden können, sind an den Enden der Förderschnecke 1, die gegen die ihnen benachbarten Bereiche des Absetzbeckens A bewegt werden, Leitbleche oder -schienen 61, 62 vorgesehen, die an den feststehenden Wänden des Absetzbecken A so entlanggleiten, daß dabei das Abwasser W im Bereich seiner Oberfläche O der Förderschnecke 1 zugeführt wird. Die Leitschiene 61 gleitet an dem Unterbau des Drehauflagers LD entlang, während die Leitschiene 62 den Zwischenbehälter 2 in Anströmungsrichtung des Abwassers W abdeckt, so daß die in den radialen Grenzbereichen befindlichen Schwimmstoffe nach außen bzw. innen in den Arbeitsbereich der Förderschnecke 1 gelangen.

### Aufstellung der Bezugszeichen

- 1: Förderschnecke
- 10: Längsachse
- 11: Schneckenwelle
- 12: Schneckengang
- 2: Zwischenbehälter
- 21, 22: Seitenwand
- 23: Schneckenlager
- 24: Schneckengehäuse
- 25: Behälterboden
- 26: Zulaufventil
- 27: Stelleinrichtung
- 3: Antriebsmotor
- 4: Halterung
- 41: Aufhängung
- 42: Holm
- 43: Prallblech
- 5: Förderpumpe
- 51: Förderleitung
- 52: Trichter
- 61, 62: Leitblech oder -schiene

- d: Durchmesser (der Schneckenwelle 11)
- D: Außen-Durchmesser (von 1 bzw.12)
- s: Spaltbreite

- A: Absetzbecken
- B: Beckenboden
- DR: Drehbewegung
- FG: Fördergut
- FR: Förderrichtung
- LD: Drehauflager
- LR: Rollenlager
- O: Oberfläche
- R: Räumer
- U: Umfassungswand
- V: Abstreifvorrichtung
- W: Abwasser

## Patentansprüche

1. Verfahren zum Abräumen von Schwimmstoffen von der Oberfläche (O) eines Abwassers (W) in einem Absetzbecken (A) einer Kläranlage oder dergleichen,
**dadurch gekennzeichnet, daß**
(a) die Schwimmstoffe mittels einer Förderschnecke (1) in einen in dem Absetzbecken (A) eintauchenden Zwischenbehälter (2) gefördert werden und dabei das darin befindliche Abwasser durch eine im Bodenbereich angeordnete Öffnung verdrängen, daß
(b) das in dem Zwischenbehälter (2) angesammelte Fördergut (FG) nach Bedarf zeitund/oder füllungsabhängig abgepumpt wird.

2. Verfahren nach Anspruch 1, **dadurch gekennzeichnet, daß** die Förderschnecke (1) während der Förderung in zu ihrer durch die Förderrichtung (FR) bestimmten Längsachse entlang der Oberfläche (O) des Abwassers (W) bewegt wird.

3. Verfahren nach Anspruch 1 oder 2, **dadurch gekennzeichnet, daß** die Förderschnecke derart um ihre Längsachse gedreht wird, daß diese sich auf der Zuführseite der Schwimmstoffe aus dem Wasser herausbewegt.

4. Verfahren nach einem der Ansprüche 1 bis 3, **dadurch gekennzeichnet, daß** die Förderschnecke (1) während der Entleerung des Zwischenbehälters (2) stillgesetzt wird.

5. Verfahren nach einem der Ansprüche 1 bis 4, **dadurch gekennzeichnet daß** dem in dem Zwischenbehälter (2) befindlichen Fördergut (FG) Abwasser (W) aus dem Absetzbecken (A) in einem Umfang zugesetzt wird, daß das Fördergut (FG) aus dem Zwischenbehälter (2) über einen im Zwischenbehälter eingesetzten Trichter abgepumpt wird.

6. Verfahren nach einem der Ansprüche 1 bis 5, **dadurch gekennzeichnet, daß** die aus einer in dem Zwischenbehälter (2) gelagerten Schneckenwelle (11) und einem Schneckengang (12) bestehende Förderschnecke (1) an der Oberfläche (O) des Abwassers (W) und zu dieser parallel angeordnet ist.

7. Verfahren nach Anspruch 6, **dadurch gekennzeichnet, daß** die Förderschnecke (1) so über dem Abwasser (W) höhengeführt ist, daß die Schneckenwelle (11), die Oberfläche (O) des Abwassers (W) dabei etwa tangierend, eine Barriere für die Schwimmstoffe bildet.

8. Räumvorrichtung zur Durchführung des Verfahrens nach einem der Ansprüche 1 bis 7, **dadurch gekennzeichnet, daß** der Zwischenbehälter (2) an einer oder mehreren Förderschnecken (1) an deren in ihrer Förderrichtung (FR) befindlichen jeweiligen Ende vorgesehen-ist.

9. Räumvorrichtung nach Anspruch 8, **dadurch gekennzeichnet, daß** an dem Zwischenbehälter (2) ein Antriebsmotor (3) für die Förderschnecke (1) vorgesehen ist.

10. Räumvorrichtung nach einem der Ansprüche 8 oder 9, **dadurch gekennzeichnet, daß** an dem Zwischenbehälter (2) mindestens ein rohrförmiges, geschlossenes, kurzes Schneckengehäuse (24) für die Förderschnecke (1) vorgesehen ist.

11. Räumvorrichtung nach Anspruch 10, **dadurch gekennzeichnet, daß** die Länge des Schneckengehäuses (24) mindestens dem einfachen, vorteilhaft aber dem dreifachen Außen-Durchmesser (D) der Förderschnecke (1) entspricht.

12. Räumvorrichtung nach Anspruch 10 oder 11, **dadurch gekennzeichnet, daß** der Innen-Durchmesser des Schneckengehäuses (24) den Außen-Durchmesser (D) der Förderschnecke 1) nur soweit übertrifft, daß eine Rückförderung von Fördergut (FG) gegen die Förderrichtung (FR) im wesentlichen ausgeschlossen ist.

13. Räumvorrichtung nach einem der Ansprüche 9 bis 12, **dadurch gekennzeichnet, daß** der Antriebsmotor (3) auf der der Förderschnecke (1) entgegengesetzten Seite des Zwischenbehälters (2) auf der Innen- oder Außenseite angeordnet ist.

14. Räumvorrichtung nach Anspruch 13, **dadurch gekennzeichnet, daß** die Schneckenwelle (11) durch den Zwischenbehälter (2) hindurchgeführt ist.

15. Räumvorrichtung nach einem der Ansprüche 8 bis 14, **dadurch gekennzeichnet, daß** an dem Zwischenbehälter (2) ein Zulaufventil (26) vorgesehen ist, durch welches der Innenraum des Zwischenbehälters (2) mit dem in dem Absetzbecken (A) befindlichen Abwasser (W) verbindbar ist.

16. Räumvorrichtung nach Anspruch 15, **dadurch gekennzeichnet, daß** das Zulaufventil (26) im Bereich des Behälterbodens (25) vorgesehen ist.

17. Räumvorrichtung nach Anspruch 15 oder 16, **dadurch gekennzeichnet, daß** das Zulaufventil (26) durch eine vorzugsweise von Hand betätigbare, aus dem Absetzbecken (A) herausführende Stelleinrichtung (27) bedienbar ist.

18. Räumvorrichtung nach einem der Ansprüche 8 bis 17, **dadurch gekennzeichnet, daß** an dem Zwischenbehälter (2) eine Förderleitung (51), beispielsweise ein Rohr oder ein Schlauch, zum Abtransport des Fördergutes (FG) vorgesehen ist.

19. Räumvorrichtung nach Anspruch 18, **dadurch gekennzeichnet, daß** in dem Zwischenbehälter (2) eine Förderpumpe (5) mit saugseitigem Trichter zur Förderung des Fördergutes (FG) durch die Förderleitung (51) vorgesehen ist.

20. Räumvorrichtung nach Anspruch 19, **dadurch gekennzeichnet, daß** die Trichteröffnung etwa dem Querschnitt des Zwischenbehälters (2) entspricht.

21. Räumvorrichtung nach einem der Ansprüche 19 oder 20, **dadurch gekennzeichnet, daß** die Trichteröffnung etwas unterhalb des Niveaus des Wassers im Absetzbecken (A) liegt.

22. Räumvorrichtung nach einem der Ansprüche 19 bis 21, **dadurch gekennzeichnet, daß** die Trichteröffnung 10 cm unterhalb des Niveaus des Absetzbeckens (A) liegt.

23. Räumvorrichtung nach einem der Ansprüche 8 bis 22, **dadurch gekennzeichnet, daß** an der Förderschnecke (1) auf deren dem anströmenden Abwasser (W) abgewandten Seite in ganzer Länge ein abströmseitiges Prallblech (43) vorgesehen ist.

24. Räumvorrichtung nach Anspruch 23, **dadurch gekennzeichnet, daß** das Prallblech (43) die Förderschnecke (1) teilweise unterfängt, vorzugsweise von dem Schneckengang (12) gering beabstandet ist.

25. Räumvorrichtung nach einem der Ansprüche 8 bis 24, **dadurch gekennzeichnet, daß** die Förderschnecke (1) stationär am Beckenrand angeordnet ist und mit einer Räumeinrichtung für die Zuführung der Schwimmstoffe zusammenwirkt.

26. Räumvorrichtung nach einem der Ansprüche 8 bis 24, **dadurch gekennzeichnet, daß** die Förderschnecke (1) an einem an dem Absetzbecken (A) befindlichen, über die Oberfläche (O) des Abwassers (W) bewegbaren Räumer (R) angebracht ist.

27. Räumvorrichtung nach Anspruch 26, **dadurch gekennzeichnet, daß** mehrere Halterungen (4) für die Förderschnecke (1) vorgesehen sind, die an dem Räumer (R) befestigt sind.

28. Räumvorrichtung nach Anspruch 27, **dadurch gekennzeichnet, daß** das Prallblech (43) an den Halterungen (4) befestigt ist.

29. Räumvorrichtung nach einem der Ansprüche 8 bis 28, **dadurch gekennzeichnet, daß** ein kreisförmiges Absetzbecken (A) vorgesehen ist.

30. Räumvorrichtung nach Anspruch 29, **dadurch gekennzeichnet, daß** die Förderschnecke (1) an einem oder beiden Enden mit Leitblechen oder -schienen (61,62) versehen ist, die während der Bewegung der Förderschnecke (1) an den feststehenden Wänden des Absetzbecken (A) so entlanggleiten, daß dabei das Abwasser (W) im Bereich seiner Oberfläche (O) der Förderschnecke (1) zugeführt wird.

31. Räumvorrichtung nach Anspruch 30, **dadurch gekennzeichnet, daß** ein/e äußere/s Leitblech/Leitschiene (62) den Zwischenbehälter (2) in Anströmungsrichtung des Abwassers (W) abdeckt.

## Claims

1. A method of clearing suspended matter from the surface (O) of waste water (W) in a sedimentation tank (A) of a waste treatment plant or the like,
**characterised in that**
(a) the suspended matter is conveyed by means of a worm conveyor (1) into an intermediate chamber (2) immersed in the sedimentation tank (A) and thus expels the waste water contained therein through an opening arranged in the base region, and **in that**
(b) the conveyed material (FG) which has accumulated in the intermediate chamber (2) is pumped away as required in dependence upon time and/or filling.

2. A method according to claim 1, **characterised in that**, during the conveying process, the worm conveyor is moved in (sic - transversely) to its longitudinal axis, which is determined by the conveying direction (FR), along the surface (O) of the waste water (W).

3. A method according to claim 1 or claim 2, **characterised in that** the worm conveyor is rotated about its longitudinal axis in such a way that it moves out of the water on the suspended matter feed side.

4. A method according to any one of claims 1 to 3, **characterised in that** the worm conveyor (1) is stopped while the intermediate chamber (2) is being emptied.

5. A method according to any one of claims 1 to 4, **characterised in that** waste water (W) from the sedimentation tank (A) is added to the conveyed material (FG) in the intermediate chamber (2) in an amount such that the conveyed material (FG) is pumped out of the intermediate chamber (2) via a funnel positioned in the intermediate chamber.

6. A method according to any one of claims 1 to 5, **characterised in that** the worm conveyor (1), which consists of a worm shank (11) supported in the intermediate chamber (2) and of a worm flight (12), is arranged on and parallel to the surface (O) of the waste water (W).

7. A method according to claim 6, **characterised in that** the worm conveyor (1) is guided above the waste water (W) at a height such that the worm shank (11), thus approximately touching the surface (O) of the waste water (W), forms a barrier for the suspended matter.

8. A clearing device for carrying out the method according to any one of claims 1 to 7, **characterised in that** the intermediate chamber (2) on one or more worm conveyors (1) is in each case provided on the end thereof in its conveying direction (FR).

9. A clearing device according to claim 8, **characterised in that** the intermediate chamber (2) is provided with a drive motor (3) for the worm conveyor (1).

10. A clearing device according to any one of claims 8 or 9, **characterised in that** the intermediate chamber (2) is provided with at least one tubular, closed, short worm casing (24) for the worm conveyor (1).

11. A clearing device according to claim 10, **characterised in that** the length of the worm casing (24) is equivalent to at least once but advantageously three times the outside diameter (D) of the worm conveyor (1).

12. A clearing device according to claim 10 or 11, **characterised in that** the inside diameter of the worm casing (24) exceeds the outside diameter (D) of the worm conveyor 1) (sic - (1)) only to an extent as substantially prevents conveyed material (FG) from being returned against the conveying direction (FR).

13. A clearing device according to any one of claims 9 to 12, **characterised in that** the drive motor (3) is arranged on the intermediate chamber (2) side opposite to the worm conveyor (1), on the inside or outside.

14. A clearing device according to claim 13, **characterised in that** the worm shank (11) is guided through the intermediate chamber (2).

15. A clearing device according to any one of claims 8 to 14, **characterised in that** the intermediate chamber (2) is provided with an inlet valve (26), by means of which the interior of the intermediate chamber (2) can be connected with the waste water (W) in the sedimentation tank (A).

16. A clearing device according to claim 15, **characterised in that** the inlet valve (26) is provided in the region of the chamber base (25).

17. A clearing device according to claim 15 or claim 16, **characterised in that** the inlet valve (26) can be actuated by an actuating device (27), which preferably can be operated by hand and extends out of the sedimentation tank (A).

18. A clearing device according to any one of claims 8 to 17, **characterised in that** the intermediate chamber (2) is provided with a conveying line (51), for example a pipe or a hose, for transporting away the conveyed material (FG).

19. A clearing device according to claim 18, **characterised in that** the inside of the intermediate chamber (2) is provided with a delivery pump (5) with a suction-end funnel to convey the conveyed material (FG) through the conveying line (51).

20. A clearing device according to claim 19, **characterised in that** the funnel throat is approximately equivalent to the cross-section of the intermediate chamber (2).

21. A clearing device according to either of claims 19 or 20, **characterised in that** the funnel throat lies slightly below the level of the water in the sedimentation tank (A).

22. A clearing device according to any one of claims 19 to 21, **characterised in that** the funnel throat lies 10 cm below the level of the sedimentation tank (A).

23. A clearing device according to any one of claims 8 to 22, **characterised in that** the side of the worm conveyor (1) further from the incoming waste water (W) is provided along its whole length with an outgoing-side impact plate (43).

24. A clearing device according to claim 23, **characterised in that** the impact plate (43) partly underlies the worm conveyor (1), preferably slightly spaced apart from the worm flight (12).

25. A clearing device according to any one of claims 8 to 24, **characterised in that** the worm conveyor (I) is arranged in a stationary manner on the edge of the tank and co-operates with a clearing mechanism for the feed of suspended matter.

26. A clearing device according to any one of claims 8 to 24, **characterised in that** the worm conveyor (1) is attached to a scraper (R) which is disposed on the sedimentation tank (A) and can be moved over the surface (O) of the waste water (W).

27. A clearing device according to claim 26, **characterised in that** there are provided for the worm conveyor (1) a plurality of supports (4) which are secured to the scraper (R).

28. A clearing device according to claim 27, **characterised in that** the impact plate (43) is secured to the supports (4).

29. A clearing device according to any one of claims 8 to 28, **characterised in that** a circular sedimentation tank (A) is provided.

30. A clearing device according to claim 29, **characterised in that** the worm conveyor (1) is provided at one or both ends with guide plates or guide tracks (61, 62) which, during travel of the worm conveyor (1), slide along the stationary walls of the sedimentation tank (A) in such a way that the waste water (W), in the region of its surface (O), is fed to the worm conveyor (1).

31. A clearing device according to claim 30, **characterised in that** one outer guide plate/guide track (62) covers the intermediate container (2) in the direction of the incoming waste water (W).

## Revendications

1. Procédé d'enlèvements de matières flottantes de la surface supérieure (O) d'eaux usées (W) dans un bassin de décantation (A) d'une installation d'épuration ou similaire,
**caractérisé en ce que**
a) les matières flottantes sont transportées, à l'aide d'une vis transporteuse (1), dans un récipient intermédiaire (2) plongeant dans le bassin de décantation (A) et refoulent, par une ouverture située dans la zone du fond, les eaux usées qui s'y trouvent, **en ce que**
b) le produit transporté (FG) rassemblé dans le récipient intermédiaire (2) est enlevé par pompage suivant les besoins, en fonction du temps ou du remplissage.

2. Procédé suivant la revendication 1, **caractérisé en ce que** la vis transporteuse (1) est déplacée, pendant le transport des produits, selon un axe longitudinal par rapport à elle et déterminé par la direction de transport (FR), le long de la surface supérieure (O) des eaux usées (W).

3. Procédé suivant la revendication 1 ou 2, **caractérisé en ce qu'**on fait tourner la vis transporteuse (1) autour de son axe longitudinal de telle façon que celle-ci ressorte de l'eau du côté où arrivent les matières flottantes.

4. Procédé suivant l'une des revendications 1 à 3, **caractérisé en ce qu'**on arrête la vis transporteuse (1) pendant la vidange du récipient intermédiaire (2).

5. Procédé suivant l'une des revendications 1 à 4, **caractérisé en ce que** des eaux usées (W) provenant du bassin de décantation (A) sont ajoutées en un tour au produit transporté (FG) se trouvant dans le récipient intermédiaire (2), le produit transporté (FG) étant enlevé par pompage du récipient intermédiaire (2) par une trémie installée dans le récipient intermédiaire.

6. Procédé suivant l'une des revendications 1 à 5, **caractérisé en ce que** la vis transporteuse (1), constituée d'un arbre de vis sans fin (11) monté dans le récipient intermédiaire (2) et d'un couloir de vis sans fin (12), est disposée à la surface supérieure (O) des eaux usées (W) et parallèlement à celle-ci.

7. Procédé suivant la revendication 6, **caractérisé en ce que** la vis transporteuse (1) est guidée en hauteur au-dessus des eaux usées (W) de telle façon que l'arbre de vis sans fin (11), en étant alors sensiblement tangent à la surface supérieure (O) des eaux usées, forme une barrière pour les matières flottantes.

8. Installation d'évacuation pour l'exécution du procédé suivant l'une des revendications 1 à 7, **caractérisée en ce que** le récipient intermédiaire (2) est prévu sur une ou plusieurs vis transporteuses (1) à chacune de leurs extrémités respectives se trouvant dans leur sens de transport (FR).

9. Installation d'évacuation suivant la revendication 8, **caractérisée en ce que**, sur le récipient intermédiaire (2), est prévu un moteur d'entraînement (3) pour la vis transporteuse (1).

10. Installation d'évacuation suivant l'une des revendications 8 ou 9, **caractérisée en ce que**, sur le récipient intermédiaire (2), est prévu au moins un carter de vis sans fin (24) court, tubulaire et fermé, pour la vis transporteuse (1).

11. Installation d'évacuation suivant la revendication 10, **caractérisée en ce que** la longueur du carter de vis sans fin (24) correspond au moins à une fois le diamètre extérieur (D) de la vis transporteuse (1), mais avantageusement à trois fois ce diamètre.

12. Installation d'évacuation suivant la revendication 10 ou 11, **caractérisée en ce que** le diamètre intérieur du carter de vis sans fin (24) ne dépasse le diamètre extérieur (D) de la vis transporteuse (1) que dans la mesure où il est essentiellement exclu que se produise un retour de produit transporté (FG), en sens opposé au sens de transport.

13. Installation d'évacuation suivant l'une des revendications 9 à 12, **caractérisée en ce que** le moteur d'entraînement (3) est disposé sur le côté du récipient intermédiaire (2) opposé à la vis transporteuse (1), sur la face intérieure ou extérieure.

14. Installation d'évacuation suivant la revendication 13, **caractérisée en ce que** l'arbre de vis sans fin (11) traverse le récipient intermédiaire (2).

15. Installation d'évacuation suivant l'une des revendications 8 à 14, **caractérisée en ce qu'**il est prévu, sur le récipient intermédiaire (2), une vanne d'arrivée (26) par laquelle l'intérieur du récipient intermédiaire (2) peut être relié avec les eaux usées se trouvant dans le bassin de décantation (A).

16. Installation d'évacuation suivant la revendication 15, **caractérisée en ce que** la vanne d'arrivée (26) est prévue dans la zone du fond (25) du récipient.

17. Installation d'évacuation suivant la revendication 15 ou 16, **caractérisée en ce que** la vanne d'arrivée (26) peut être actionnée par un dispositif de réglage (27) sortant du bassin de décantation (A) et, de préférence, actionnable manuellement.

18. Installation d'évacuation suivant l'une des revendications 8 à 17, **caractérisée en ce que**, sur le récipient intermédiaire (2), il est prévu une conduite de transport (51), par exemple un tube ou un flexible, pour l'évacuation des produits transportés (FG).

19. Installation d'évacuation suivant la revendication 18, **caractérisée en ce que**, dans le récipient intermédiaire (2), il est prévu une pompe de transport (5) comportant une trémie côté aspiration, pour le transport des produits transportés (FG) par la conduite de transport (51).

20. Installation d'évacuation suivant la revendication 19, **caractérisée en ce que** l'ouverture de la trémie correspond sensiblement à la section du récipient intermédiaire (2).

21. Installation d'évacuation suivant l'une des revendications 19 ou 20, **caractérisée en ce que** l'ouverture de la trémie se trouve un peu en dessous du niveau de l'eau dans le bassin de décantation (A).

22. Installation d'évacuation suivant l'une des revendications 19 à 21, **caractérisée en ce que** l'ouverture de la trémie se trouve 10 cm en dessous du niveau du bassin de décantation (A).

23. Installation d'évacuation suivant l'une des revendications 8 à 22, **caractérisée en ce que**, sur la vis transporteuse (1), sur son côté opposé à l'arrivée des eaux usées (W), sur toute la longueur, est prévue une tôle de choc (43) côté écoulement.

24. Installation d'évacuation suivant la revendication 23, **caractérisée en ce que** la tôle de choc (43) reprend par dessous, en partie, la vis transporteuse (1), en étant, de préférence, à une faible distance du couloir de la vis sans fin (12).

25. Installation d'évacuation suivant l'une des revendications 8 à 24, **caractérisée en ce que** la vis transporteuse (1) est disposée stationnaire sur le bord du bassin et travaille en coordination avec un dispositif d'évacuation pour l'arrivée des matières flottantes.

26. Installation d'évacuation suivant l'une des revendications 8 à 24, **caractérisée en ce que** la vis transporteuse (1) est adaptée sur un évacuateur (R) mobile au-dessus de la surface supérieure (O) des eaux usées (W), et situé sur le bassin de décantation (A).

27. Installation d'évacuation suivant la revendication 26, **caractérisée en ce que** plusieurs fixations (4) pour la vis transporteuse (1) sont prévues, qui sont fixées sur l'évacuateur (R).

28. Installation d'évacuation suivant la revendication 27, **caractérisée en ce que** la tôle de choc (43) est fixée aux fixations (4).

29. Installation d'évacuation suivant l'une des revendications 8 à 28, **caractérisée en ce qu'**il est prévu un bassin de décantation (A) de forme circulaire.

30. Installation d'évacuation suivant la revendication 29, **caractérisée en ce que** la vis transporteuse (1) est prévue, sur l'une ou sur les deux extrémités, avec des tôles ou des rails de guidage (61, 62) qui glissent longitudinalement, pendant le déplacement de la vis transporteuse (1), sur les parois fixes du bassin de décantation (A) de telle façon que les eaux usées (W) soient envoyées, dans la zone de la surface supérieure (O), à la vis transporteuse (1).

31. Installation d'évacuation suivant la revendication 30, **caractérisée en ce qu'**une tôle extérieure ou un rail extérieur de guidage (62) recouvrent le récipient intermédiaire (2) dans la direction de l'arrivée de l'écoulement des eaux usées (W).
